# EUROPÄISCHE PATENTANMELDUNG

(11) **EP 1 107 008 A2**
(43) Veröffentlichungstag der Anmeldung: **13.06.2001**
(21) Anmeldenummer: 00125720.3
(22) Anmeldetag: 24.11.2000
(51) Int. Cl.: G01P 3/489, G01P 3/481

(54) **Verfahren und Vorrichtung zur Unterdrückung von Drehzahlschwankungen**

(30) Priorität: 10.12.1999 DE 19959679
(71) Anmelder: ROBERT BOSCH GMBH, 70442 Stuttgart (DE)
(72) Erfinder: Hammel, Christof, 70188 Stuttgart (DE)

(57) **Zusammenfassung**

Die Erfindung bezieht sich auf eine Vorrichtung zur Erfassung einer zeitlich schwankenden Größe an einer Brennkraftmaschine, wie beispielsweise der Drehzahl oder des Saugrohrdruckes, wobei diese Größe von einem, einem Geberrad (1) zugeordneten Geber (5) abgetastet wird und in einer Auswerteeinheit (18) ein zeitlicher Mittelwert der gemessenen Größe ermittelt wird. Es ist ein Speicher (13) vorgesehen, auf dessen aufeinanderfolgende Speicherelemente (13.1, 13.2) mit einer vorgebbaren Abtastfrequenz (21) zugegriffen wird, um ein gemitteltes Drehzahlsignal N_{MIT} (25) zu ermitteln.

## Beschreibung

### Technisches Gebiet

Die Erfindung bezieht sich auf ein Verfahren und eine Vorrichtung zur Unterdrückung von Drehzahlschwankungen, welche insbesondere an Brennkraftmaschinen auftreten. Zur Verbesserung des Motormanagements an Brennkraftmaschinen ist es wünschenswert, einen möglichst glatten Drehzahlverlauf zur Verfügung zu haben, anhand dessen sich weitere Steuerungsparameter zuverlässig ableiten lassen.

### Stand der Technik

Eine Einrichtung zur Erfassung einer periodisch schwankenden Größe einer Brennkraftmaschine ist aus DE 32 23 328 C2 bekannt. Die bei Brennkraftmaschinen üblicherweise erfaßten Betriebsparameter sind in der Regel die Drehzahl, der Saugdruck und die Ansaugluftmasse, um einige Beispiele zu nennen, die allesamt nur quasikontinuierliche Größen darstellen. Diese Größen schwanken im Arbeitstakt der Brennkraftmaschine. Bei bekannten Lösungen aus dem Stand der Technik, die keine hohen Anforderungen an die Genauigkeit der gemessenen Größen stellten, wurden Mittelwerte dieser Parameter verarbeitet, die einem länger andauerndem zeitlichen Mittelwert entsprachen. Bei modernen Steuerungssystemen für Brennkraftmaschinen ist es jedoch erforderlich, für Zünd- und Einspritzzeitpunkte die Meßgrößen genauer zu erfassen.

Bei der aus DE 32 23 328 C2 bekannten Lösung zur Erfassung einer periodischen schwankenden Größe einer Brennkraftmaschine, sind Bezugsmarkengeber, Schaltmittel zum Messen zeitlich definierter Augenblickswerte der zu messenden Größe sowie eine Rechenschaltung vorgesehen. Die periodisch schwankende Größe - beispielsweise Druck oder Drehzahl - wird einmal pro Periodendauer erfaßt, wobei der Zeitpunkt der Erfassung, bezogen auf die Kurbelwellenwinkel-Nullage liegt, bei konstant einstellbaren Winkelwerten, wobei die Rechenschaltung den zeitlichen Mittelwert der Größe angibt.

Bei dieser Vorgehensweise kann es dazu kommen, daß die Oberwellen in der auf die geschilderte Weise erfaßten Drehzahl bei der Mittelung der Drehzahl nicht vollständig unterdrückt werden. Die Oberwellen sind darauf zurückzuführen, daß in dem Falle, in dem die Signalfrequenz kleiner als die doppelte Abtastfrequenz ist, die Mittelwertbildung nicht über zwei aufeinanderfolgende Segmente erfolgt, sondern es dazu kommen kann, daß der Drehzahlwert eines Segmentes mehrfach abgetastet und mit sich selbst gemittelt wird.

### Darstellung der Erfindung

Mit der erfindungsgemäß vorgeschlagenen Lösung ist sichergestellt, daß immer die Drehzahlwerte zweier aufeiannderfolgender Segmente gemittelt werden. Damit entspricht das Ergebnis dem physikalischen Mittelwert der Motordrehzahl; insbesondere für niedrige Drehzahlen von Brennkraftmaschinen, wie beispielsweise Dieselmotoren, kann anhand der erfindungsgemäßen Vorrichtung sowie des erfindungsgemäß weiterhin vorgeschlagenen Verfahrens, ein zu einer Steuereinheit heranzuziehender Wert einer gemittelten Motordrehzahl in geglätteter Form zur weiteren Auswertung zur Verfügung gestellt werden. Anhand des zur Verfügung gestellten Verlaufs der mittleren Drehzahl, kann die Steuerung für eine Brennkraftmaschine wesentlich genauere Zünd- und Einspritzzeitpunkte ermitteln.

Mit der erfindungsgemäß vorgeschlagenen Vorrichtung und dem Verfahren kann zuverlässig verhindert werden, daß der Drehzahlwert eines Segmentes mehrfach abgetastet und mit sich selbst gemittelt wird. Dadurch verblieben bisher Oberwellen in den gemittelten Drehzahlen, die nicht vollständig unterdrückt werden konnten. Die Oberwellen lassen sich dadurch definiert ausschließen, daß die Mittelwertbildung über zwei aufeinanderfolgende Segmente erfolgt. Mittels der erfindungsgemäß vorgeschlagenen Vorrichtung und dem erfindungsgemäß vorgeschlagenen Verfahrens, läßt sich ein erheblich glatterer Drehzahlverlauf in der Startphase, beim Abstellen, sowie beim Unterschneiden, einer kurzzeitig auftretenden starken Momentenbelastung einer Brennkraftmaschine, herbeiführen.

### Zeichnung

Anhand der Zeichnung wird die Erfindung näher erläutert:

Es zeigt:
- Figur 1: die erfindungsgemäß vorgeschlagene Vorrichtung zur Erfassung einer zeitlich schwankenden Größe mit Ringspeicher,
- Figur 2: das Drehzahlspektrum einer Brennkraftmaschine in vereinfachter Form,
- die Figuren 3 und 4: die Darstellung eines Drehzahlspektrums aufgetragen über unterschiedliche Abtastfrequenzen und
- Figur 5: ein abgetastetes Drehzahlspektrum nach gleitender Mittelwertbildung.

### Ausführungsvarianten

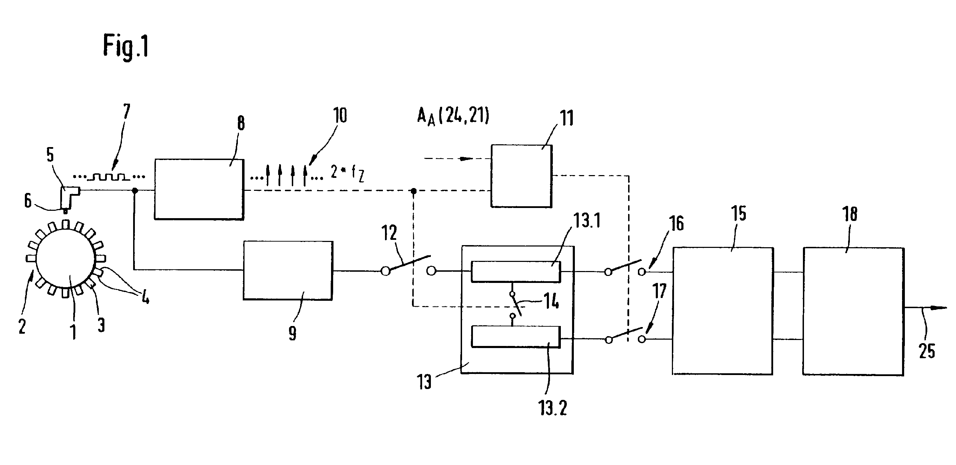

Figur 1 zeigt die erfindungsgemäß vorgeschlagene Vorrichtung zur Erfassung einer zeitlich schwankenden Größe, wie beispielsweise der Drehzahl oder des Saugrohrdruckes mit einem integrierten Ringspeicher.

Ein Geberrad 1, beispielsweise ein 60-2 Geberrad oder auch ein 120-2 Geberrad, wird mittels eines Gebers 5 abgetastet. Am Geberrad 5 ist ein Geberkopf 6 aufgenommen, der die am Umfang des Geberrades 1 aufgenommenen Zähne 3 abtastet, wobei zur Definition der Nullage des Geberrades 1 am Umfang des Geberrades 1 eine Aussparung 2 vorgesehen ist. Durch den Geber 5 wird der Wechsel der den Geberkopf 6 passierenden Zahnflanken 4 der Zähne 3 detektiert. Aus der Abtastung resultiert eine Impulsfolge 7 in Form eines gestuften Signales.

Entsprechend der Impulsfolge 7 wird durch einen Interrupt-Generator 8 aus dem Signal des Gebers 5, 6 eine Signalabfolge 10 generiert, welches sowohl einen Frequenzsteller 11, als auch einem Ringspeicher 13 zugeführt wird. Die Impulsfolge 7, resultierend aus dem Abtastsignal des Gebers 5, 6 wird weiterhin auch einem Zeitschalter 9 zugeführt. Am Frequenzsteller 11 ist die Abtastfrequenz 21 vorgegeben, die nach unten begrenzt ist. Die Abtastzeit wird, um beim niedrigsten Drehzahlen zulange Abtastzeiten zu vermeiden, auf 32 ms beispielsweise, begrenzt. Aus dieser Abtastzeit von beispielsweies 32 ms resultiert im dargestellten Ausführungsbeispiel eine Abtastfrequenz von 31,25 Hz. Die Abtastfrequenz 21 kann somit auf einen unteren Wert begrenzt werden. Anstelle der Abtastzeit von 32 ms lassen sich auch andere Abtastzeiten am Frequenzsteller 11 vorgeben, so daß die erfindungsgemäß vorgeschlagene Vorrichtung an die unterschiedlichen Einsatzbedingungen an Brennkraftmaschinen unterschiedlicher Typen angepaßt werden kann.

Über ein von dem Zeitschalter an einem unterbrechenden Kontakt 12 übertragendes Signal, wird im Ringspeicher 13 der Zeiger auf das auszuwertende oberste Speicherelement 13.1 gesetzt. Dieses Speicherelement (k) und das nächstfolgende Speicherelement (k-1) im Ringspeicher 13 sind über eine Umspeicherverbindung 14 miteinander verbunden. Über diese Umspeicherverbindung 14 kann eine Umspeicherung der Inhalte der jeweils angesteuerten Ringspeicherelemente 13.1 bzw. 13.2 erfolgen. Die Umspeicherung wird durch die Signalabfolge 10, erzeugt durch den Interrupt-Generator 8, abhängig von der Interrupt-Abfolge 10 vorgenommen, so daß sichergestellt ist, daß in kontinuierlicher Abfolge immer zwei aufeinanderfolgende, im Ringspeicher 13 abgelegte Segementinformationen (k) bzw. (k-1) ausgewertet werden.

Die Initialisierung der Auswertung erfolgt dadurch, daß nach erfolgter Umspeicherung der Speicherinhalte der Speicherelemente 13.1. bzw. 13.2 über ein vom Frequenzsteller 11 ausgehendes Signal mittels einer Recheneinheit 15 die Berechnung der aktuellen Segmentdrehzahlen 16 und 17 durch die Verbindung zu den Inhalten des jeweils adressierten Speicherelemente 13.1 und 13.2 hergestellt wird. Die Recheneinheit 15 vermag nunmehr auf die Inhalte der Speicherelemente 13.1 bzw. 13.2 des Ringspeichers zuzugreifen und aus den dort abgelegten Segmentinformationen jeweils aktuelle Segmentdrehzahlen zu berechnen. Diese den aufeinanderfolgenden Segmenten k bzw. k-1 im Ringspeicher 13 entsprechenden Segmentdrehzahlen liegen dann einer durchzuführenden Mittelwertbildung 18 zugrunde, aus der ein gemitteltes Drehzahlsignal N_{MIT}, hier identifiziert durch Bezugszeichen 25, ermittelt werden kann.

Dadurch ist sichergestellt, daß das erhaltene Ergebnis stets den physikalischen Mittelwert der tatsächlichen Drehzahl der Brennkraftmaschine entspricht.

Mittels des erfindungsgemäß vorgeschlagenen Ringspeichers und der Adressierung der einzelnen Speicherelemente 13.1. und 13.2 des Ringspeichers 13 kann sichergestellt werden, daß ein Speicherelement - einem Segment entsprechend - nicht mehrfach ausgewertet wird. Die Datenübertragung aus den Speicherelementen 13.1. 13.2 des Ringspeichers 13 in die dazugehörige Recheneinheit 15 zur Auswertung der Speicherinhalte, erfolgt mit der Frequenz, die am Frequenzsteller 11 eingestellt worden ist und die den jeweiligen Einsatzerfordernissen der erfindungsgemäßen Vorrichtung schnell und einfach angepaßt werden kann.

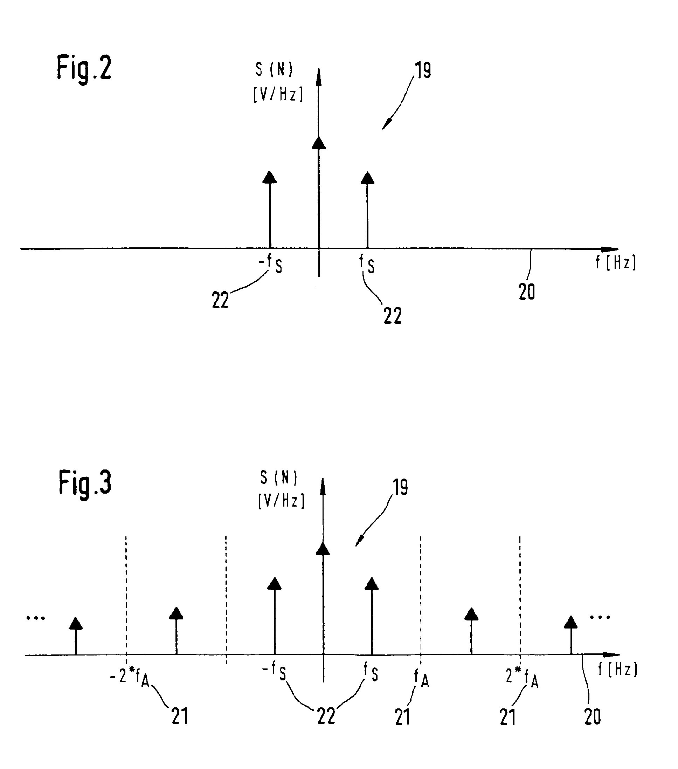

Figur 2 zeigt in vereinfachter Darstellung ein Drehzahlspektrum einer Brennkrafimaschine.

Aufgetragen über die Frequenz 20, läßt sich das Drehzahlspektrum 19 einer Brennkraftmaschine durch die Vorzeichen behaftet dargestellten Signalfrequenz 22 (fₛ) eingrenzen.

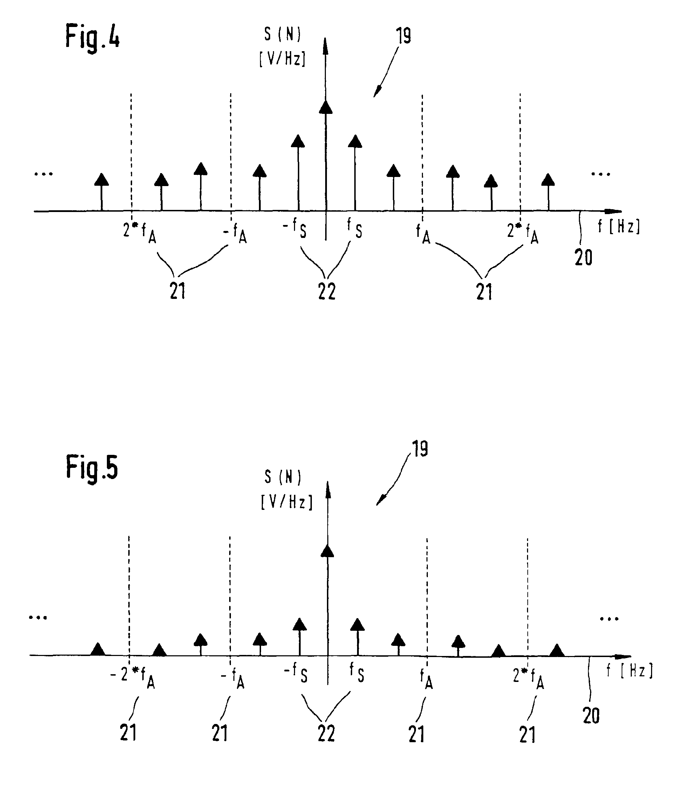

Die Figuren 3 und 4 zeigen Darstellungen eines Drehzahlspektrums für unterschiedliche Abtastfrequenzen.

Bei einer Abtastung des Drehzahlspektrums mit doppelter Zündfrequenz ergibt sich das in Figur 3 mit Bezugszeichen 19 dargestellte Drehzahlspektrum. Symmetrisch zum Nulldurchgang der Achse der Frequenz 20 läuft das Spektrum glockenkurvenförmig über die vorzeichenbehafteten dargestellten Werte der Frequenz hin abnehmend, hierbei beträgt f_{A} = 2 x fₛ. Der Signalverlauf verläuft mit zunehmenden Absolutwerten der Frequenz hin in abnehmender Richtung. Eine nachfolgende, gleitende Mittelwertbildung unterdrückt nun sämtliche Oberwellenanteile vollständig.

In der Figur 4 ist das Spektrum für den Fall dargestellt, daß f_{A} > 2 x fₛ ist.

Figur 5 schließlich zeigt ein abgetastetes Drehzahlspektrum 19, nach gleitender Mittelwertbildung, bei dem die Oberwellen in der gemittelten Drehzahl nicht vollständig unterdrückt sind. Der gemittelte Drehzahlwert ist für die Auswertung einer Steuereinheit für eine Brennkraftmaschine nur bedingt verwendbar, da die erforderliche Glättung nicht verwirklicht ist. Bei der Ermittlung der mittleren Drehzahl nach Figur 5 kann eine mehrmalige Auswertung ein und desselben Segmentes aufgetreten sein, wodurch dieses mehrfach gemittelt in den Verlauf der mittleren Drehzahl eingeht und einer Glättung der Kurve der mittleren Drehzahl entgegenwirkt.

Mittels des erfindungsgemäß vorgeschlagenen Verfahrens zur Erfassung einer zeitlich schwankenden Größe lassen sich die aufeinanderfolgenden Segmente, die zur Auswertung der aktuellen Segmentdrehzahl erforderlich sind, definiert adressieren. Es ist sichergestellt, daß bei jeder Neuberechnung zuvor eine Umspeicherung der Inhalte der Segmente k und k-1 in den jeweiligen Speicherelementen 13.1, 13.2 des Ringspeichers 13 stattgefunden hat. Damit ist eine kontinuierliche Auswertung der Speicherinhalte im Ringspeicher 13 gewährleistet, so daß kein Überspringen einzelner Segmentinformationen auftreten kann. Aus dieser Auswertestrategie ergibt sich ein wesentlich glatterer Verlauf der erfindungsgemäß vorgesehenen Verfahrensweise ermittelten mittleren Drehzahl n_{MIT}, bezeichnend mit Bezugszeichen 25.

### Bezugszeichenliste

- 1: Geberrad
- 2: Aussparung
- 3: Zahn
- 4: Zahnflanke
- 5: Geber
- 6: Geberkopf
- 7: Impulsfolge
- 8: Interrupt-Generator
- 9: Zeitschalter
- 10: Signalabfolge
- 11: Frequenzsteller
- 12: Unterbrecher
- 13: Ringspeicher
- 13.1: Speicherelement (k)
- 13.2: Speicherelement (k-1)
- 14: Umspeicherung
- 15: Recheneinheit
- 16: aktuelle Segmentdrehzahl k
- 17: aktuelle Segmentdrehzahl k-1
- 18: Mittelwertbildung
- 19: Spektrum von n_{MOT}
- 20: Frequenz
- 21: Abtastfrequenz f_{A}
- 22: Signalfrequenz fₛ
- 23: Zündfrequenz f_{z}
- 24: begrenzte Abtastzeit t _{Abtast, grenz}
- 25: gemitteltes Drehzahlsignal N_{MIT}

## Patentansprüche

1. Vorrichtung zur Erfassung einer zeitlich schwankenden Größe an einer Brennkraftmaschine, wobei die Größe von einem Geberrad (1) zugeordneten Geber (5) abgetastet wird und in einer Auswerteeinheit (18) ein zeitlicher Mittelwert der gemessenen Größe ermittelt wird, dadurch gekennzeichnet, daß ein Speicher (13) vorgesehen ist, auf dessen aufeinanderfolgende Speicherelemente (13.1, 13.2) mit einer vorgebbaren Abtastfrequenz (21) zugegriffen wird, um ein gemitteltes Drehzahlsignal N_{MIT} (25) zu ermitteln.

2. Vorrichtung gemäß Anspruch 1, dadurch gekennzeichnet, daß entsprechend der vom Geber (5) abgetasteten Signale im Interrupt-Generator (8) ein Interrupt-Signalabfolge (10) erzeugt wird.

3. Vorrichtung gemäß Anspruch 1, dadurch gekennzeichnet, daß an einem Frequenzsteller (11) eine Abtastfrequenz (21) einstellbar ist.

4. Vorrichtung gemäß Anspruch 3, dadurch gekennzeichnet, daß die Abtastfrequenz (21) auf einen Minimalwert begrenzt ist.

5. Vorrichtung gemäß Anspruch 1, dadurch gekennzeichnet, daß mit Eintreffen eines Signals der Signalabfolge (10) im Ringspeicher (13) die Inhalte der Ringspeicherelemente (13.1, 13.2) umgespeichert werden.

6. Vorrichtung gemäß der Ansprüche 1 und 2, dadurch gekennzeichnet, daß aus den Inhalten der Speicherelemente (13.1, 13.2) mit der Abtastfrequenz (21) getaktet die jeweils aktuellen Segmentdrehzahlen (16, 17) in einer Recheneinheit (15) berechnet werden.

7. Vorrichtung gemäß Anspruch 6, dadurch gekennzeichnet, daß aus den jeweils aktuellen Segmentdrehzahlen (16, 17) durch eine Mittelwertbildung (18) die gemittelte Drehzahl N_{MIT} (25) gebildet wird.

8. Verfahren zur Erfassung einer zeitlich schwankenden Größe an einer Brennkraftmaschine, wobei die Größe von einem, einem Geberrad (1) zugeordneten Geber (5) abgetastet wird und in einer Auswerteeinheit (18) ein zeitlicher Mittelwert der gemessenen Größe gebildet wird, dadurch gekennzeichnet, daß die Inhalte von Speicherelemente (13.1, 13.2) mit einer Abtastfrequenz (21) zur Bestimmung jeweils des aktuellen Inhaltes der Speicherelemente (13.1, 13.2) entsprechenden Segmentdrehzahlen (16, 17) herangezogen werden, bevor die Inhalte der Speicherelemente (13.1, 13.2) über die Signalabfolge (10) eines Interrupt-Generators (8) umgespeichert werden.

9. Verfahren gemäß Anspruch 8, dadurch gekennzeichnet, daß auch bei asynchron erfolgender Weiterverarbeitung der Segmentdrehzahlen (16, 17) die Ermittlung des gemittelten Drehzahlsignales N_{MIT} (25) anhand aufeinanderfolgender Inhalte der Speicherelemente (13.1, 13.2) erfolgt.
